# EUROPEAN PATENT APPLICATION

(11) **EP 2 112 623 A1**
(43) Date of publication of application: **28.10.2009**
(21) Application number: 09005040.2
(22) Date of filing: 06.04.2009
(51) Int. Cl.: G06Q 10/00

(54) **Template author and method of driving data capture in document templates**

(30) Priority: 22.04.2008 GB 0807296
(71) Applicant: THUNDERHEAD LTD, Estree Hertfordshire WD6 3SY (GB)
(72) Inventor: McLennan, James, Hutton Brentwood CM13 1AG (GB)
(74) Representative: Turnbull, Alexander James

(57) **Abstract**

The present invention provides a method of providing data capture in a document template, the document template having conditional criteria and data definitions; the method including applying incomplete data to the document template; and
(a) parsing the document template;
(b) identifying a data capture step;
(c) requesting data in response to the data capture step;
(d) re-parsing the selected document template;

wherein the method further includes either identifying an nth data capture step and so repeating steps (c) and (d) or generating a final document.

## Description

The present invention relates, in general, to documents generated from templates comprising embedded logic. In particular, the invention provides a template authoring environment allowing a user to create and order data capture steps in a document template and a method of generating a document from the template by requesting input data from a user.

In WO 2005/036429, the contents of which are hereby incorporated by reference, the applicants of the present invention disclose a method and system for automatically providing responses to recipients over a variety of communication media. According to WO 2005/036429, an event can trigger the automatic generation of a letter to a recipient where the letter is generated using a letter template stored within the memory store of a computer. The letter template comprises embedded logic which is addressed by data input from a data store. The data store is populated with details such as name and address of a recipient and also details such as credit rating, data of birth, preferred means of communication and a policy renewal date. When an event occurs such as a policy renewal date a letter is automatically generated based upon the data input from the data store. The embedded logic within the template letter determines the final form of the output letter. For example, the age of a recipient which is a variable in the data store calculated from a date of birth value may trigger alternative passages of text to be inserted automatically within a letter. This may occur if certain offers are available only to recipients over or under a certain age. Additionally, the preferred means of communication can trigger the letter to be sent by one of a variety of media, for example, electronic mail, postal letter or facsimile.

As the technology of products delivering the embodiments described in WO 2005/036429 are rolled out and adopted by business users, the inventors of the present application have identified areas for innovation providing enhanced functionality and operational efficiency.

To enable the automatic generation of a letter to a recipient according to WO 2005/036429, data is fed into a document template typically as extensible markup language (XML) from a pre-existing populated data store. However, the applicants have identified a number of applications for which the automatic generation of documents using a letter template comprising embedded logic would be beneficial, but where the data does not pre-exist or is data that is often so widely different between documents such that it would not be economically worthwhile to populate a data store containing sufficient data to cover all eventualities.

According to a first aspect of the present invention, there is therefore provided a method of providing data capture in a document template, the document template having conditional criteria and data definitions; the method including applying incomplete data to the document template; and
(a) parsing the document template;
(b) identifying a data capture step;
(c) requesting data in response to the data capture step;
(d) re-parsing the selected document template;
wherein the method further includes either identifying an nth data capture step and so repeating steps (c) and (d) or generating a final document.

The present invention therefore provides a way in which data can be captured from a user without the need for a fully-populated data source or where the data is totally absent. Additionally, the present invention uses a rules-based template to intelligently drive the data capture process. To a user the method resembles that of an interview; with a series of graphical user interface interview panels prompting a user for data. Responses to the prompts determine a given "path" through the interview process, meaning that the content management system only prompts the user for data that is necessary for the particular permutation of document. In this way, a document template can provide many different permutations of document.

Preferably, the step of applying incomplete data includes applying no initial data to the document template. The data source is therefore totally absent. In this way, the method can operate as a "stand-alone" platform without the need for any predetermined data input.

Preferably, the step of requesting data in response to the data capture step includes storing the input data in a data store. Optionally, the input data can be stored for re-use at a later opportunity removing a need for re-entering the data.

Preferably, the data capture steps are ordered in an assembly-tree order. In this way, with each data capture step a number of available permutations is reduced until just one permutation is reached. By arranging the data capture steps in this way, the promptings should appear more logical. For example, asking for a date of birth input can affect subsequent entries and remove a need to ask a later question such as "What is your national insurance number?" if the answer to the data of birth input is such that entity is of an age below which a national insurance number is provided. In such an embodiment a subsequent question can be, "What is the name of your legal guardian?"

Preferably, the method includes selecting the document template from a suite of available document templates. Different document templates can be made available to best suit different scenarios.

Preferably, the data definitions point to fixed text items within the document template, and a fixed text item so pointed to is included in the selected text.

Preferably, conditional criterion in the response template automatically activate alternative selections of fixed data within the document template according to whether the criterion is met or whether the criterion is not met and if the selections of fixed data are unavailable then a data capture step is identified.

Preferably, the method includes selecting at least one medium from among a plurality of selectable media for providing the communication to the recipient; composing the communication in a form suitable for use on each of said at least one selected medium; and employing the or each of the selected medium to send the communication.

According to a second aspect of the present invention, there is provided a carrier medium carrying software control code to, when running, implement the method according to the first aspect of the present invention. Preferably, the carrier medium is a CD-ROM, DVD or other digital memory store.

According to a third aspect of the present invention, there is provided a computer system for generating a document from a document template, the document template having conditional criteria and data definitions; the method including applying incomplete data to the document template; and
(a) parsing the document template;
(b) identifying a data capture step;
(c) requesting data in response to the data capture step;
(d) re-parsing the selected document template;
wherein the method further includes either identifying an nth data capture step and so repeating steps (c) and (d) or generating the document.

According to a fourth aspect of the present invention, there is provided a template author operable to create and order a number of data capture steps in a document template; the template author when operational parsing the conditional criteria and data definitions of the document template; and determining a sequence for data capture steps.

The functionality of the system is typically delivered in a browser-based environment enabling the system to be operational on a personal computer by, for example, a medium such as Internet Explorer. This functionality advantageously enables a user to achieve cost savings through efficiency gains and compatibility between computer networks.

Embodiments of the present invention will now be described, by way of example only, and with reference to the accompanying drawing in which:

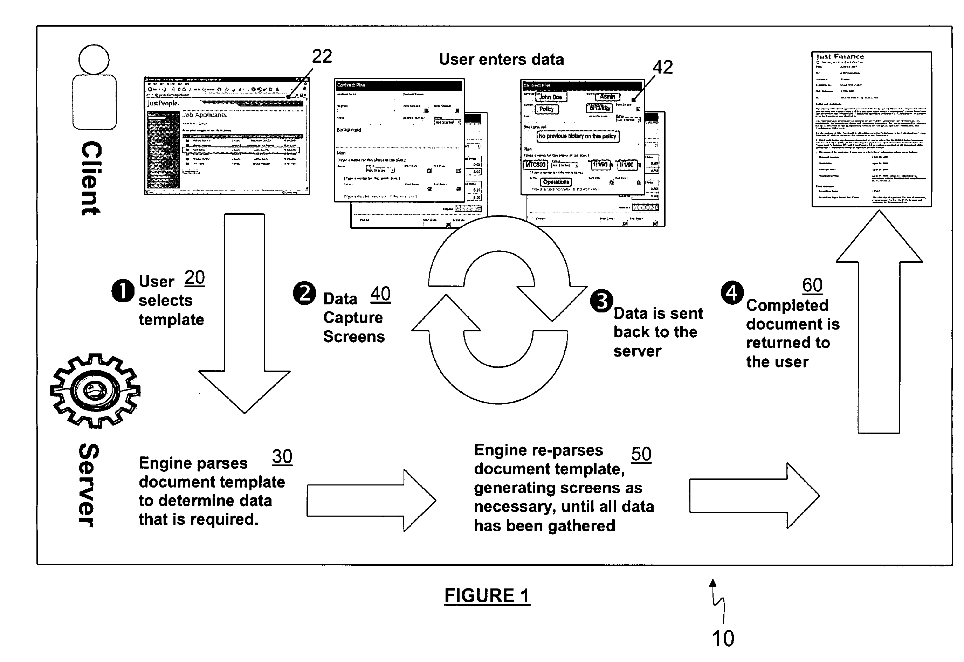

Figure 1 is a schematic flow-chart showing a method of driving data capture in a document template according to an embodiment of the invention.

Embodiments of the present invention provide a template author and a method of generating a document from a document template. The method of generating a document from a document template is referred to as an "Interview Process" throughout the following description.

### 1. Template Author: Interview Process Definition

A template author is provided in a Business Content Studio which automatically creates all Data Capture Steps for an entire document. The template author works by parsing the logic and the embedded data items to determine a logical sequence in which to collect the data items. For example, the following logic shows two pieces of optional content nested inside an 'IF'/'Otherwise' test. Both of the paragraphs contain embedded data items:

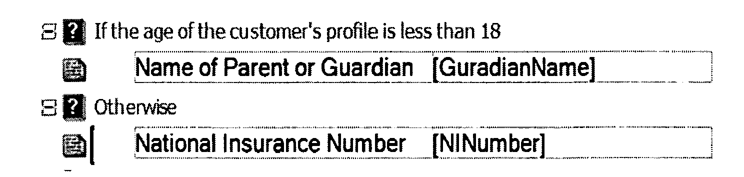

In terms of an interview process, the above logic states that 'When you know the Customer age, you can determine whether you need to know *either* Parent Name *or* NI Number'. This gives rise to the need to capture three pieces of data, only two of which would be required for any given scenario.

The result of executing the template author would be the insertion, within the document template, of three interview screens. These screens happen to capture a single data item but in a more typical scenario they would capture multiple data items per screen.

Using the example above, upon completion of the template author the document template would have the following screens inserted. This shows that the user needs to provide a value for 'Age' but, having captured the age, the user needs either to supply 'Guardian Name' or 'NINumber'.

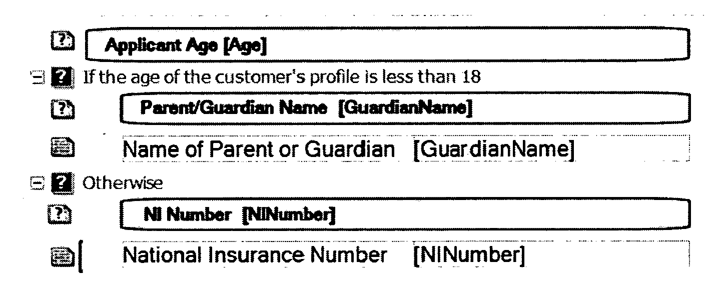

### 2. Interview Process

At run time, a user selects a document template from a Content Management System. An application software engine such as that provided by Thunderhead^{™} under the product Thunderhead Now^{™} proceeds to parse the Document Template, potentially using any partially incomplete data that has been supplied, but the present invention is suited for a scenario where no stored data is supplied. When the first Data Capture Step is encountered, an Interview Form file is generated which contains the screen defined in the Document Template. The Interview Form file is displayed to the user.

The user subsequently enters the required data values and presses "Next". This would submit the transaction back to the engine. The engine then uses the supplied data to re-evaluate the logic in the document template and move to the next Data Capture Step. The process would be completed when all Data Capture Steps, which were applicable, had been completed.

This cycle of events, starting with the selection of a document and ending with the creation of a document, is depicted with reference to Figure 1.

Referring to Figure 1, a schematic flow-chart showing a method of driving data capture in a document template 10 according to an embodiment of the invention comprises a first step 20 in which a user selects a document template 22. The document template 22 can be one which supports letters related to house or car insurance. Alternatively, the document template 22 may support both house and car insurance with the choice being made on the initial selection. If required, a user can elect house insurance and therefore progress through a number of screens relating to house insurance. At some point, the user can decide to return to the initial selection and select car insurance, which can result in the house insurance forms being replaced by ones related to car insurance.

At step 30, the engine parses the document template 22 to determine data that is required. Data that is required results in the generation of a data capture step 40. At a data capture step 40, a user is presented with a series of graphical user interface interview panels 42 prompting a user for data. Responses to the prompts determine a given "path" through the interview process, meaning that the engine only prompts the user for data that is necessary for the particular permutation of document. In this way, a document template 22 can provide many different permutations of document.

At step 50, the engine re-parses the document template 22 until all the necessary data has been gathered. Once all the necessary data has been gathered a final document is returned to a user at step 60.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. A method of providing data capture in a document template, the document template having conditional criteria and data definitions; the method including applying incomplete data to the document template; and
(a) parsing the document template;
(b) identifying a data capture step;
(c) requesting data in response to the data capture step;
(d) re-parsing the selected document template;
wherein the method further includes either identifying an nth data capture step and so repeating steps (c) and (d) or generating a final document.

2. A method as claimed in claim 1, wherein the step of applying incomplete data includes applying no initial data to the document template.

3. A method as claimed in claim 1 or 2, wherein the step of requesting data in response to the data capture step includes storing the input data in a data store.

4. A method as claimed in any preceding claim, wherein the data capture steps are ordered in an assembly-tree order.

5. A method as claimed in any preceding claim, including selecting the document template from a suite of available document templates.

6. A method as claimed in claim 1, wherein the data definitions point to fixed text items within the document template, and a fixed text item so pointed to is included in the selected text.

7. A method as claimed in any preceding claim, wherein conditional criterion in the response template automatically activate alternative selections of fixed data within the document template according to whether the criterion is met or whether the criterion is not met and if the selections of fixed data are unavailable then a data capture step is identified.

8. A method as claimed in any preceding claim, including selecting at least one medium from among a plurality of selectable media for providing the communication to the recipient; composing the communication in a form suitable for use on each of said at least one selected medium; and employing the or each of the selected medium to send the communication.

9. A carrier medium carrying software control code to, when running, implement the method according to any one of the preceding claims.

10. A computer system for generating a document from a document template, the document template having conditional criteria and data definitions; the method including applying incomplete data to the document template; and
(a) parsing the document template;
(b) identifying a data capture step;
(c) requesting data in response to the data capture step;
(d) re-parsing the selected document template;
wherein the method further includes either identifying an nth data capture step and so repeating steps (c) and (d) or generating the document.

11. A template author operable to create and order a number of data capture steps in a document template; the template author when operational parsing the conditional criteria and data definitions of the document template; and determining a sequence for data capture steps.
